# EUROPEAN PATENT SPECIFICATION

(11) **EP 3 667 199 B1**
(45) Date of publication and mention of the grant of the patent: **05.10.2022**
(21) Application number: 18461640.7
(22) Date of filing: 10.12.2018
(51) Int. Cl.: F25B 1/00, F25B 39/04, F25B 43/00, F28F 19/00, F28D 9/00, B01D 29/11, B60H 1/00, F28F 19/01, B01D 35/18

(54) **HEAT EXCHANGER WITH FILTER, FOR REFRIGERANT FLUID LOOP**
WÄRMETAUSCHER MIT FILTER FÜR KÜHLMITTELKREISLAUF
ÉCHANGEUR DE CHALEUR AVEC FILTRE, POUR BOUCLE DE FLUIDE RÉFRIGÉRANT

(43) Date of publication of application: 17.06.2020
(73) Proprietor: Valeo Autosystemy SP. Z.O.O., 32-050 Skawina (PL)
(72) Inventor: BELZOWSKI, Michal, 32-050 Skawina (PL); POKRYWINSKI, Karol, 32-050 Skawina (PL); SZOSTEK, Dawid, 32-050 Skawina (PL); CICHOSZ, Filip, 32-050 Skawina (PL)
(74) Representative: Valeo Systèmes Thermiques

(56) References cited:
- EP-A1- 2 518 425
- EP-A1- 2 711 657
- CN-B- 103 727 706
- CN-U- 206 113 729
- FR-A1- 2 509 028
- US-B1- 6 694 773

## Description

The present invention relates to the domain of heat exchangers designed for refrigerant fluid loops. More specifically, the present invention concerns devices for filtering the refrigerant fluid that flows through such heat exchangers.

A refrigerant fluid loop generally comprises at least two heat exchangers, at least one compressor and at least one expansion device. The compressor and the expansion device are both fragile and comprise movable elements that can easily break. In particular, for the compressor, hard particles are especially dangerous - they can scratch internal surfaces and due to that increase internal friction, or decrease compression ratio. For expansion valve even soft particle can be dangerous. Particles can stop between parts and block valve in current position or reduce range of the movement. As a result, AC loop effectiveness is reduced or the loop stops working.

It is therefore important that only the refrigerant fluid enters this compressor or the expansion device. In order to achieve that goal, it is already known to filter the refrigerant fluid before it reaches one of these components.

However, some particles may be inside heat exchangers, for instance due to manufacturing processes or default in the cleaning system of such heat exchanger. The cleaning of such particles appears to be really expensive and complex. And even with all the care that can be given to this cleaning, some of those particles, especially particles that have a diameter smaller than 60µm can remain in those heat exchangers and can then be dragged by the refrigerant fluid to finally damage the compressor, the expansion device or any other element in which this refrigerant fluid could flow.

As a result, automotive suppliers are more and more concerned with this filtration, and they aim to filter even smaller particles than what is already filtered. FR2509028A1, US6694773B1, CN103727706B disclose examples of heat exchangers with filtering means.

The present invention solves at least this issue, by providing a heat exchanger for a refrigerant fluid loop, the heat exchanger comprising at least one inlet configured to allow a refrigerant fluid to enter in the heat exchanger and at least one outlet configured to allow the refrigerant fluid to exit the heat exchanger, the heat exchanger comprising at least one filter arranged at the outlet of the heat exchanger. According to the invention, the filter is brazed to the outlet, and the filter is adapted to filter the refrigerant fluid that exits the heat exchanger.

The brazing operation prevents refrigerant fluid leakages. In other words, this brazing operation forces all the refrigerant fluid that exits the heat exchanger to go through the filter, and thus to be filtered before it reaches another component of the refrigerant fluid loop the heat exchanger is intended to.

According to the present invention, the filter comprises at least one brazing ring which is brazed to the outlet of the heat exchanger and at least one meshed element configured to filter the refrigerant fluid. The filter comprises at least one smooth band interposed between the brazing ring and the meshed element. In other words, this band lacks the meshed element, preventing any capillary effect which could occur especially during the brazing operation and which, as detailed below, could lead to a diminution of the filtration efficiency.

According to the present invention, the outlet presents a first diameter smaller than a second diameter of the brazing ring. As a result, the brazing ring extends around the outlet of the heat exchanger.

According to a feature of the invention, a sealing device can be arranged between the outlet of the heat exchanger and the filter. More precisely, the sealing device can be arranged between the outlet of the heat exchanger and the brazing ring of the filter. This sealing device is thus used in addition to the brazing operation, that is to say that such sealing device is also preventing refrigerant fluid leakages between the outlet of the heat exchanger and the filter.

For instance, the filter can have a cylindrical shape, that is to say that such filter comprises a circular base from which extends a circular wall. According to the invention, the brazing ring extends from an edge of this circular wall, opposite to the circular base of the filter and this brazing ring defines an opening of the filter through which the refrigerant fluid can enter the filter or exit it, depending on the orientation of the filter relative to the outlet of the heat exchanger.

According to the invention, the filter extends, at least partially, inside the heat exchanger. Optionally, the filter can extend completely inside of the heat exchanger. As a result, when the filter extends totally inside the heat exchanger, the refrigerant fluid is filtered upstream the outlet, referring to a direction along which the refrigerant fluid flows, meanwhile, when the filter comprises at least a part that extends outside the heat exchanger, the filtration of the refrigerant fluid is operated downstream the outlet of the heat exchanger, referring to the direction along which the refrigerant fluid flows.

According to an embodiment of the invention, the filter is arranged, at least partially, in a block, said block comprising crimping means thanks to which the block can be crimped to the outlet. Advantageously, these crimping means allow a pre-positioning of the block, and so of the filter arranged in said block.

According to the invention, the heat exchanger can be configured to undertake a heat exchange between the refrigerant fluid and an airflow. For example this airflow can be taken outside a motor vehicle the heat exchanger is intended to. Alternately, the heat exchanger can be configured to undertake a heat exchange between the refrigerant fluid and a coolant. According to this alternative, the heat exchanger of the invention is arranged at an interface between the refrigerant fluid loop and a coolant loop. In other words, the heat exchanger comprises at least a first chamber through which the refrigerant fluid flows and a second chamber through which the coolant flows. Such coolant can for example be water. Alternately, the heat exchanger can also be configured to undertake a heat exchange between refrigerant from high pressure side and refrigerant from low pressure side (IHX). Such exchangers are used to increase subcooling before evaporator and increase superheating before compressor, to improve AC loop efficiency.

For instance, the heat exchanger according to the invention can be used as a condenser. In other words, the heat exchanger is then configured to liquefy and cool the refrigerant fluid that flows through it, that is to say that the refrigerant fluid enters the heat exchanger in a gaseous state and exits it in a liquid state.

Other features, details and advantages of the invention can be inferred from the specification of the invention given hereunder. Various embodiments are represented in the figures, wherein:
- figure 1 is a schematic representation of a refrigerant fluid loop that comprises at least one heat exchanger according to a first example of application of the invention ;
- figure 2 is a cross-section view of an outlet of the heat exchanger schematically illustrated on figure 1 ;

- figure 3 is a schematic representation of the heat exchanger according to a second example of application of the invention, this heat exchanger being arranged at an interface between the refrigerant loop and a coolant loop ;
- figures 4 to 6 are cross-section views of an outlet of the heat exchanger schematically illustrated on figure 3, according, respectively, to a first embodiment, to a second embodiment and to a third embodiment of the invention.

In the specification given hereunder, the words "upstream" and "downstream" refer to a direction along which a refrigerant fluid flows.

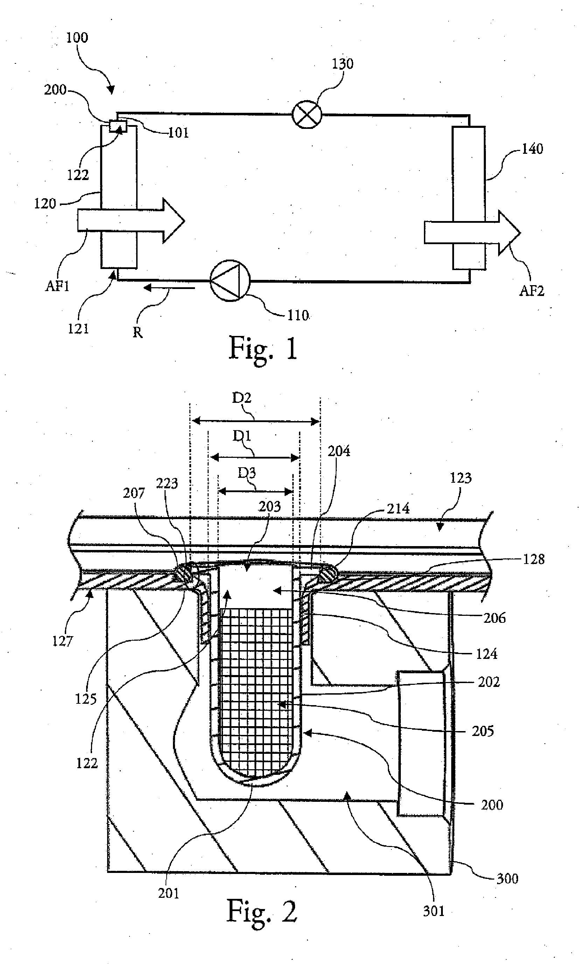

Figure 1 is a schematic view of a refrigerant fluid loop 100 intended to be accommodated in a motor vehicle. This refrigerant fluid loop 100 illustrates a first example of application of the present invention. This refrigerant fluid loop 100 comprises at least a compressor 110 configured to increase the pressure of a refrigerant fluid R circulating through the loop 100, a first heat exchanger 120 configured to undertake a heat exchange between the refrigerant fluid R and a first airflow AF1, an expansion device 130 configured to decrease the pressure of the refrigerant fluid R and a second heat exchanger 140 configured to undertake a heat exchange between the refrigerant fluid R and a second airflow AF2. For instance, the first airflow AF1 is taken outside the motor vehicle in which the refrigerant fluid loop 100 is accommodated, and the second airflow AF2 is reserved to be sent in a passenger compartment of said motor vehicle.

The first heat exchanger 120 is realized according to the invention and comprises a filter 200. According to the invention, this filter 200 is located at an outlet 122 of the heat exchanger 120, that is to say that this filter 200 is adapted to filter the refrigerant fluid R, after the heat exchange that occurs in said first heat exchanger 120.

First, the refrigerant fluid R exits the compressor 110 in a gaseous state and reaches the first heat exchanger 120, and more precisely it reaches an inlet 121 of the first heat exchanger 120. Once the refrigerant fluid R has entered the first heat exchanger 120, a transfer of calories is undertaken between said refrigerant fluid R circulating in this first heat exchanger 120 and the first airflow AF1 that flows through it. More precisely, the refrigerant fluid R gives calories to the first airflow AF1 and liquefies. In other words, the first heat exchanger 120 is used, in this particular example, as a condenser. As a result, the refrigerant fluid R exits the first heat exchanger 120 in a liquefied state and reaches the filter 200 wherein the refrigerant fluid R is filtered. In other words, it is to be understood that the filter 200 is connected on one hand to an outlet 122 of the first heat exchanger 120 configured to allow the refrigerant fluid R to exit said first heat exchanger 120 and on the other hand to a pipe 101 of the refrigerant fluid loop 100. Then the refrigerant fluid R goes through the expansion device 130 in which its pressure is reduced before it reaches the second heat exchanger 140. In this second heat exchanger 140, the refrigerant fluid R takes calories from the second airflow AF2 and evaporates. The second airflow AF2 can then be sent to the passenger compartment to drop the temperature of this compartment and the refrigerant fluid R, which is again in a gaseous state, can again reach the compressor 110 to start a new cycle.

Generally speaking, the first heat exchanger 120 and the second heat exchanger 140 are similar and both comprise at least two manifolds or header tanks arranged at an extremity of a heat exchange area wherein the heat exchange between the refrigerant fluid and the first or the second airflow AF1, AF2 takes place. According to the example of application illustrated on figure 1, the outlet 122 of the first heat exchanger 120 is arranged in one of its head tanks, and the inlet 121 of this first heat exchanger 120 is arranged in the other one. As explained in more details below, the filter 200 is, according to the invention, brazed to the outlet 122 of the heat exchanger 120, that is to say that this filter 200 is soldered to the outlet 122 with a nonferrous alloy having a lower melting point than a material which constitutes said outlet 122 and said filter 200.

We are now going to describe with more details the first example of application of the invention, and especially, the filter 200 arranged at the outlet 122 of the first heat exchanger 120, with reference to figure 2. For the rest of the specification, the words "first heat exchanger" and "heat exchanger" will be used with no distinction. Anyway, it is understood that the filter 200 arranged at the outlet 122 of the first heat exchanger 120 could be placed at an outlet of the second heat exchanger without departing from the scope of the invention.

Figures 2 illustrates a cross-section view of a head tank 123 of the heat exchanger according to the first example of application that has just been described, the outlet 122 of such heat exchanger being arranged in this head tank 123.

As illustrated, the outlet 122 of the heat exchanger is defined by a collar 124 which extends outside the heat exchanger, that is to say that this collar 124 extends away from the head tank 123. According to the invention, the filter 200 is brazed to a base 125 of this collar 124. As illustrated, this base 125 of the collar 124 is realized by a portion of a wall 127 in which the outlet 122 is arranged. According to the first example of application, this wall 127 is a wall which defines, at least partially, the head tank 123.

The filter 200 presents a cylindrical shape, or a U-shaped cross-section as illustrated on figure 2. In other words, this filter 200 comprises a circular base 201 from which extends a circular wall 202, and an opening 203, which faces the circular base 201 and through which the refrigerant fluid reaches the filter 200. The filter 200 also comprises a brazing ring 204 which extends from said circular wall 202, and more precisely from a free edge of this circular wall 202, that is to say an edge of this circular wall 202 opposite to the circular base 201. As illustrated, the brazing ring 204 defines the opening 203 of the filter 200. Additionally, this brazing ring 204 forms the part of the filter 200 thanks to which it is brazed to the outlet 122. Thus it is understood that this brazing ring 204 is in contact with the collar 124, and more precisely with the base 125 of this collar 124, as described above. Such filter 200 can advantageously be made of a single piece, that is to say that the circular base 201, the circular wall 202 and the brazing ring 204 cannot be separated without damaging at least one of them.

The filter 200 also comprises at least one meshed element 205 which forms the part of the filter 200 which actually filters the refrigerant fluid.

As the filter 200 is brazed to the outlet 122 of the heat exchanger 120, this filter 200, and the meshed element 205 are both realized with a material which resists high temperature, and more precisely, which resists to the temperatures at which the brazing operation is realized. For example, the brazing can be realized at temperature between 580°C and 600°C.

According to the first example of application of the invention, the filter 200 extends mainly in a block 300 which is attached to the head tank 123. Such block 300 comprises at least one path 301 through which the refrigerant fluid is able to flow, this path 301 being directly connected to the outlet 122 of the heat exchanger. As illustrated on figure 2, the collar 124 defining the outlet 122 and the filter 200 both extend mainly in the path 301 of this block 300.

In order to prevent any capillary effect that could lead to the spreading of the nonferrous alloy used for the brazing operation in the head tank 123 or around the meshed element 205, according to the invention, the filter 200 comprises a smooth band 206, that is to say a band which lacks the meshed element 205. Indeed, such the spreading of the nonferrous alloy could result in a diminution of the filtration efficiency of the filter 200, which is not desirable. As shown, this smooth band 206 is interposed between the brazing ring 204 thanks to which the filter 200 is brazed to the base 125 of the collar 124, and the meshed element 205 which filters the refrigerant fluid.

According to the invention, a sealing device 207 can be arranged between a rim 214 of the brazing ring 204 and the outlet 122 of the heat exchanger. More precisely, this sealing device 207 is received in a groove 128 arranged in the base 125 of the collar 124 defining the outlet 122 of the heat exchanger. As illustrated, the sealing device 207 is realized by an O-ring that surrounds the brazing ring 204 of the filter 200. This sealing device 207, in combination with the brazing operation, create a sealing area 223 that advantageously prevents any refrigerant fluid leakage between the filter 200 and the collar 124 defining the outlet 122 of the heat exchanger. In other words, all the refrigerant fluid that leaves the heat exchanger 120 through its outlet 122 has been previously filtered. Obviously, this sealing area 223 extends all around the outlet 122, as does the sealing device 207.

We also note that a first diameter D1 of the outlet 122 of the heat exchanger is smaller than a second diameter D2 of the brazing ring 204. As a result, such brazing ring 204 is arranged around said outlet 122. According to the example illustrated on figure 2, a third diameter D3 of the filter 200 is smaller than both the first diameter D1 of the outlet and the second diameter D2 of the brazing ring 204. According to the invention, the first diameter D1 of the outlet 122 is measured perpendicularly to the collar 124 defining such outlet 122, the second diameter D2 of the brazing ring 204 is measured along a straight line which crosses both the rim 214 of this brazing ring 204 and a centre of this brazing ring 204, and the third diameter D3 of the filter 200 is measured perpendicularly to its circular wall 202.

Advantageously, the block 300 in which the filter 200 extends can comprise crimping means - not represented here - configured to allow a pre-positioning of this block 300, that is to say that those crimping means permit to position the block 300, and therefore the filter 200 too, relative to the head tank 123 before the brazing operation.

According to the first example of application of the invention, the refrigerant fluid that flows in the head tank 123 of the heat exchanger after the heat exchange with the first airflow, reaches the filter 200 through its opening 203. The refrigerant fluid is then filtered by the meshed element 205 and finally reaches the path 301 of the block 300 which is connected to the rest of the refrigerant fluid loop. The refrigerant fluid is thus filtered downstream the outlet 122 of the heat exchanger, before it reaches any other component of the refrigerant fluid loop.

For instance, the meshed element 205 is configured to filter, that is to say to retain, particles that present a diameter bigger than 50µm. It is understood that this is only an example and that the meshed element 205 can be modified and adapted to retain particles of different diameters without departing from the invention.

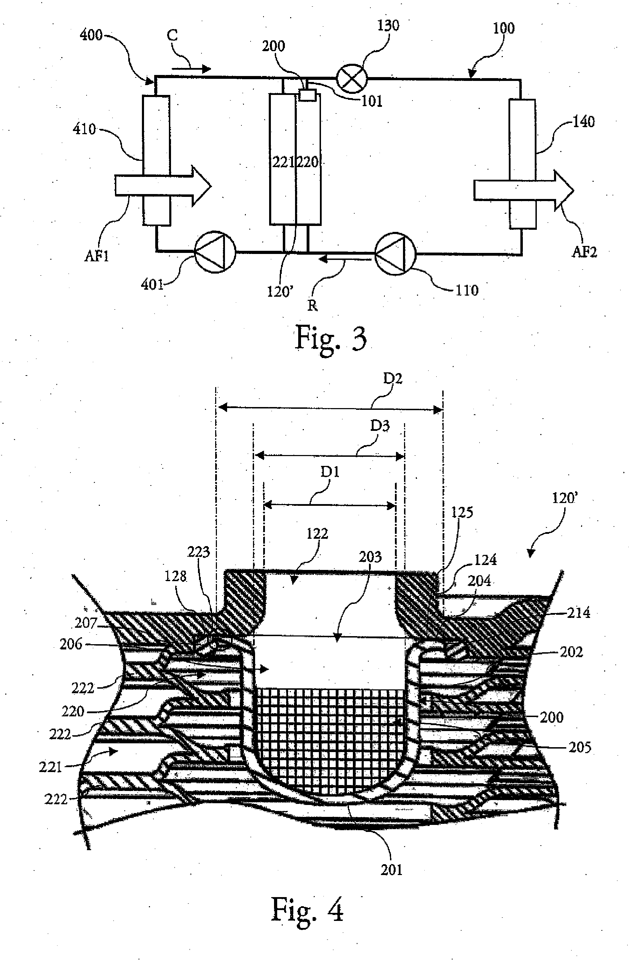

Figure 3 illustrates schematically the refrigerant fluid loop 100 according to a second example of application of the invention. For the sake of brevity, some of the features shared by both the first example of application and the second example of application of the invention are not described again. This second example of application of the invention differs from the first example of application, essentially in the fact that the first heat exchanger 120' is configured to undertake a heat exchange between two fluids that flows through it. In other words, this first heat exchanger 120' is arranged at an interface between the refrigerant fluid loop 100 and a coolant loop 400. The first heat exchanger 120', according to this second example of application, therefore comprises a first chamber 220 through which the refrigerant fluid R flows and a second chamber 221 through which a coolant C, for instance water, flows. This second chamber 221 is arranged on the coolant loop 400, such coolant loop 400 comprising at least a pump 401 for circulating the coolant C, and a third heat exchanger 410 configured to undertake a heat exchange between the coolant C and the first airflow AF1 taken outside the motor vehicle. As a result, the coolant C that flows through the third heat exchanger 410 releases calories it carries in the first airflow AF1, this coolant C then reaches the second chamber 221 of the first heat exchanger 120' wherein it captures calories from the refrigerant fluid R that flows in the first chamber 220 of said first heat exchanger 120'. The refrigerant loop 100, on its side, works as described above. In particular, it is understood that the first heat exchanger 120' according to the second example of application of the invention is also used as a condenser.

The coolant loop 400 will not be described in further details, and the following specification will focus on the first heat exchanger 120'. As earlier, in the following specification, the words "first heat exchanger" and "heat exchanger" will be used with no distinction.

Figures 4 to 6 illustrate, in cross-section views, the heat exchanger 120' according to the second example of application of the invention, those figures illustrating, respectively, a first embodiment, a second embodiment and a third embodiment of the present invention, all those three embodiments being intended to be mounted on a cooling loop of the kind illustrated on figure 3.

As described with reference to the first example of application, the outlet 122 of the heat exchanger 120' is defined by the collar 124 and the filter 200 is brazed to the base 125 of this collar 124. The filter 200 is also similar to what have been previously described and it presents a cylindrical shape with the base 201, the circular wall 202 extending from this base 201, the opening 203 which faces the base 201, and the brazing ring 204 thanks to which the filter 200 is brazed to the outlet 122, and more precisely thanks to which the filter 200 is brazed to the base 125 of the collar 124 defining said outlet 122. The filter 200 further comprises the meshed element 205, the smooth band 206 which prevents capillary effect and the sealing device 207 interposed between the brazing ring 204 and the base 125 of the collar 124. In a similar way to what have been described with reference to figure 2, the sealing device 207 is more precisely received in the groove 128 arranged in the base 125 of the collar 124.

According to the second example of application of the invention, the heat exchanger 120' comprises several plates 222 stacked one above the other. Those plates 222 each present a particular shape configured to generate the first chamber 220 and the second chamber 221 of the heat exchanger 120', as described above. Those plates 222 are configured to undertake the heat exchange between the refrigerant fluid that flows through the first chamber 220 and the coolant that flows through the second chamber 221, that is to say that those plates 222 form intermediary between the coolant and the refrigerant fluid.

As detailed hereunder, the three embodiments relative to the second example of application of the invention differ from one another especially in the position of the filter 200.

Figure 4 is a cross-section view of a part of the heat exchanger 120' in which the outlet 122 is arranged, according to the first embodiment. According to this first embodiment, the filter 200 extends mainly into the heat exchanger 120'. In other words, the brazing ring 204 is in contact with the base 125 of the collar 124 defining the outlet 122 and the rest of the filter 200 extends from this brazing ring 204 in a direction opposite to the position of the outlet 122. Thus, the refrigerant fluid enters the filter 200 through its base 201 or its circular wall 202 and it exits said filter 200 through its opening 203, this opening 203 being directly connected to the outlet 122 of the heat exchanger 120'. As a result, the refrigerant fluid is filtered upstream the outlet 122.

According to this first embodiment, the first diameter D1 of the outlet 122 is smaller than the second diameter D2 of the brazing ring 204. Since, according to this first embodiment, the filter does not extend through the outlet 122 of the heat exchanger 120', the third diameter D3 of the filter 200 is also bigger that the first diameter D1 of the outlet 122.

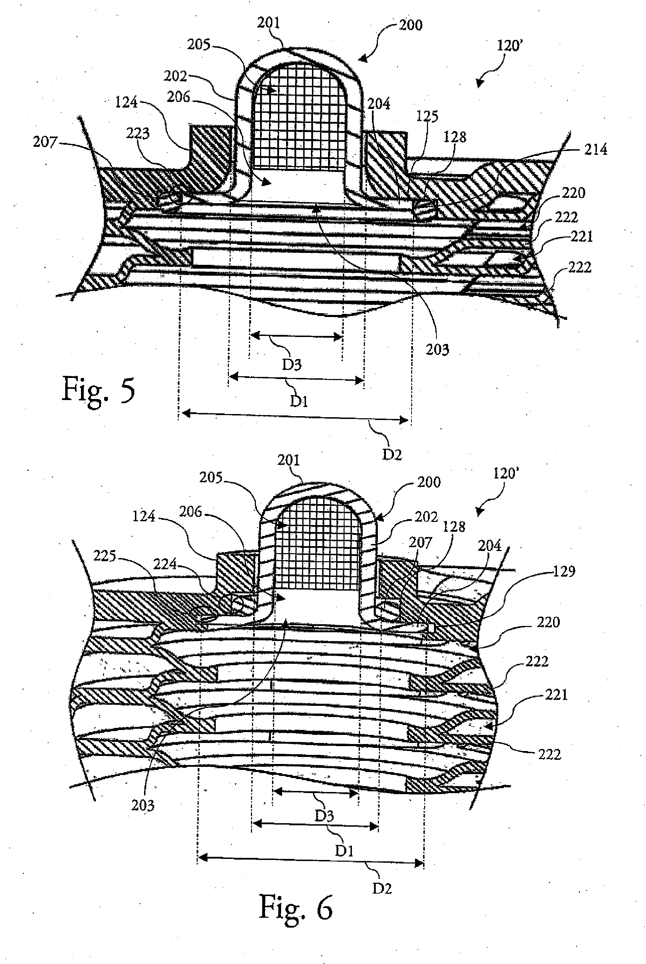

Referring now to figures 5 and 6, we are going to describe the second embodiment and the third embodiment of the invention.

The second and the third embodiments of the second example of application differ from the first embodiment in that the filter 200 extends both inside the heat exchanger 120' and outside said heat exchanger 120'. More precisely, as can be seen on figures 5 and 6, the brazing ring 204 of the filter 200 is arranged inside the heat exchanger 120, a first part of the circular wall 202 of the filter 200 extends in the outlet 122 of the heat exchanger 120', that is to say that said first part of the circular wall 202 is surrounded by the collar 124 which defines said outlet 122, and a second part of this circular wall 202 and the base 201 of the filter 200 extend outside the heat exchanger 120'. As a result, according to those embodiment, the third diameter D3 of the filter 200 is smaller than the first diameter D1 of the outlet 122. Another difference that results from this particular arrangement, is that the refrigerant fluid enters the filter 200 through its opening 203 and leaves it through its circular wall 202 or its base 201. In other words, the refrigerant fluid is filtered downstream the outlet 122.

The third embodiment illustrated on figure 6 also differs from the first and the second embodiments in the shape of the areas which receives the brazing ring 204 of the filter 200 and the sealing device 207. As shown, the base 125 of the collar 124 which defines the outlet 122 of the filter 200 presents two grooves 128, 129. A first groove 128 is similar to what have been previously described, this first groove 128 receiving the sealing device 207. The main difference stands in the fact that a second groove 129 is arranged under the first groove 127 according to the orientation of the heat exchanger 120' as illustrated in figure 6. In other words, the first groove 128 is closer to the base 201 of the filter 200 than the second groove 129. As a result the sealing device 207 arranged in the first groove 128 is surrounded by the brazing ring 204, part of the smooth band 206 of the filter 200 and the wall of the base 125 in which such first groove 128 is arranged. In other words, according to this third embodiment of the second example of application of the invention, two sealing areas 224, 225 are created instead of one, ensuring an even better sealing between the filter 200 ant the outlet 122 of the heat exchanger 120',

It will be understood from the foregoing that the present invention provides a simple, easily adaptable and easily replaceable means to filter the refrigerant fluid that exits a heat exchanger accommodated on a refrigerant fluid loop so as to prevent any damage on other components of such a refrigerant fluid loop.

However, the invention cannot be limited to the means and configurations described and illustrated herein. Instead, the invention is only defined by appended independent claim 1. In particular, the shape and arrangement of the filter and/or of the outlet of the heat exchanger can be modified insofar as they fulfil the functionalities described in the present document and comprise all features of appended independent claim 1.

## Claims

1. Heat exchanger (120, 120') for a refrigerant fluid loop (100), the heat exchanger (120, 120') comprising at least one inlet (121) configured to allow a refrigerant fluid (R) to enter in the heat exchanger (120, 120') and at least one outlet (122) configured to allow the refrigerant fluid (R) to exit the heat exchanger (120, 120'), the heat exchanger (120, 120') comprising at least one filter (200) arranged at the outlet (122) of the heat exchanger (120, 120'), wherein the filter (200) is brazed to the outlet (122), and in that the filter (200) is adapted to filter (200) the refrigerant fluid (R) that exits the heat exchanger (120, 120'), wherein the filter (200) comprises at least one brazing ring (204) which is brazed to the outlet (122) of the heat exchanger (120, 120') and at least one meshed element (205) configured to filter (200) the refrigerant fluid (R), **characterized in that** the filter (200) comprises at least one smooth band (206) interposed between the brazing ring (204) and the meshed element (205).

2. Heat exchanger (120, 120') according to claim 1, wherein the outlet (122) presents a first diameter (D1) smaller than a second diameter (D2) of the brazing ring (204).

3. Heat exchanger (120, 120') according to any of the preceding claims, wherein a sealing device (207) is arranged between the outlet (122) of the heat exchanger (120, 120') and the filter (200).

4. Heat exchanger (120, 120') according to the preceding claim wherein the sealing device (207) is arranged between the outlet (122) of the heat exchanger (120, 120') and the brazing ring (204) of the filter (200).

5. Heat exchanger (120, 120') according to any of the preceding claims, wherein the filter (200) has a cylindrical shape.

6. Heat exchanger (120, 120') according to any of the preceding claims, wherein the filter (200) extends, at least partially, inside the heat exchanger (120, 120').

7. Heat exchanger (120, 120') according to any of the preceding claims, wherein the filter (200) extends completely inside of the heat exchanger (120, 120').

8. Heat exchanger (120, 120') according to any of claims 1 to 6, wherein the filter (200) is arranged, at least partially, in a block (300), said block (300) comprising crimping means thanks to which the block (300) can be crimped to the outlet (122).

9. Heat exchanger (120) according to any of the preceding claims, wherein the heat exchanger (120) is configured to undertake a heat exchange between the refrigerant fluid (R) and an airflow (AF1).

10. Heat exchanger (120') according to any of claims 1 to 8, wherein the heat exchanger (120') is configured to undertake a heat exchange between the refrigerant fluid (R) and a coolant (C).

11. Heat exchanger (120, 120') according to any of the preceding claims, herein the heat exchanger (120, 120') is usable as a condenser.

## Patentansprüche

1. Wärmetauscher (120, 120') für einen Kühlmittelkreislauf (100), wobei der Wärmetauscher (120, 120') mindestens einen Einlass (121), der ausgestaltet ist, um zuzulassen, dass ein Kühlmittelfluid (R) in den Wärmetauscher (120, 120') eintritt, und mindestens einen Auslass (122) umfasst, der ausgestaltet ist, um zuzulassen, dass das Kühlmittelfluid (R) aus dem Wärmetauscher (120, 120') austritt, wobei der Wärmetauscher (120, 120') mindestens einen Filter (200) umfasst, der an dem Auslass (122) des Wärmetauschers (120, 120') angeordnet ist, wobei der Filter (200) an den Auslass (122) hartgelötet ist, und dass der Filter (200) vorgesehen ist, um das Kühlmittelfluid (R), welches aus dem Wärmetauscher (120, 120') austritt, zu filtrieren (200), wobei der Filter (200) mindestens einen Hartlötring (204), der an den Auslass (122) des Wärmetauschers (120, 120') hartgelötet ist, und mindestens ein Maschenelement (205) umfasst, das ausgestaltet ist, um das Kühlmittelfluid (R) zu filtrieren (200), **dadurch gekennzeichnet, dass** der Filter (200) mindestens ein glattes Band (206) umfasst, das zwischen dem Hartlötring (204) und das Maschenelement (205) angeordnet ist.

2. Wärmetauscher (120, 120') nach Anspruch 1, wobei der Auslass (122) einen ersten Durchmesser (D1) aufweist, der kleiner als ein zweiter Durchmesser (D2) des Hartlötrings (204) ist.

3. Wärmetauscher (120, 120') nach einem der vorhergehenden Ansprüche, wobei eine Dichtungsvorrichtung (207) zwischen dem Auslass (122) des Wärmetauschers (120, 120') und dem Filter (200) angeordnet ist.

4. Wärmetauscher (120, 120') nach einem der vorhergehenden Ansprüche, wobei die Dichtungsvorrichtung (207) zwischen dem Auslass (122) des Wärmetauschers (120, 120') und dem Hartlötring (204) des Filters (200) angeordnet ist.

5. Wärmetauscher (120, 120') nach einem der vorhergehenden Ansprüche, wobei der Filter (200) eine zylindrische Form hat.

6. Wärmetauscher (120, 120') nach einem der vorhergehenden Ansprüche, wobei der Filter (200) sich mindestens teilweise innerhalb des Wärmetauschers (120, 120') erstreckt.

7. Wärmetauscher (120, 120') nach einem der vorhergehenden Ansprüche, wobei der Filter (200) sich vollständig innerhalb des Wärmetauschers (120, 120') erstreckt.

8. Wärmetauscher (120, 120') nach einem der Ansprüche 1 bis 6, wobei der Filter (200) mindestens teilweise in einem Block (300) angeordnet ist, wobei der Block (300) Verpressungsmittel umfasst, dank derer der Block (300) an den Auslass (122) gepresst werden kann.

9. Wärmetauscher (120) nach einem der vorhergehenden Ansprüche, wobei der Wärmetauscher (120) ausgestaltet ist, um einen Wärmetausch zwischen dem Kühlmittelfluid (R) und einem Luftfluss (AF1) durchzuführen.

10. Wärmetauscher (120') nach einem der Ansprüche 1 bis 8, wobei der Wärmetauscher (120') ausgestaltet ist, um einen Wärmetausch zwischen dem Kühlmittelfluid (R) und einem Kühlmittel (C) durchzuführen.

11. Wärmetauscher (120, 120') nach einem der vorhergehenden Ansprüche, wobei der Wärmetauscher (120, 120') als Kondensator nutzbar ist.

## Revendications

1. Échangeur de chaleur (120, 120') pour une boucle de fluide frigorigène (100), l'échangeur de chaleur (120, 120') comprenant au moins une entrée (121) configurée pour laisser entrer un fluide frigorigène (R) dans l'échangeur de chaleur (120, 120') et au moins une sortie (122) configurée pour laisser sortir le fluide frigorigène (R) de l'échangeur de chaleur (120, 120'), l'échangeur de chaleur (120, 120') comprenant au moins un filtre (200) disposé à la sortie (122) de l'échangeur de chaleur (120, 120'), dans lequel le filtre (200) est brasé sur la sortie (122), et en ce que le filtre (200) est adapté pour filtrer (200) le fluide frigorigène (R) qui sort de l'échangeur de chaleur (120, 120'), le filtre (200) comprenant au moins un anneau de brasage (204) qui est brasé sur la sortie (122) de l'échangeur de chaleur (120, 120') et au moins un élément à mailles (205) configuré pour filtrer (200) le fluide frigorigène (R), **caractérisé en ce que** le filtre (200) comprend au moins une bande lisse (206) intercalée entre l'anneau de brasage (204) et l'élément à mailles (205).

2. Échangeur de chaleur (120, 120') selon la revendication 1, dans lequel la sortie (122) présente un premier diamètre (D1) inférieur à un deuxième diamètre (D2) de l'anneau de brasage (204).

3. Échangeur de chaleur (120, 120') selon l'une quelconque des revendications précédentes, un dispositif d'étanchéité (207) étant disposé entre la sortie (122) de l'échangeur de chaleur (120, 120') et le filtre (200).

4. Échangeur de chaleur (120, 120') selon la revendication précédente, le dispositif d'étanchéité (207) étant disposé entre la sortie (122) de l'échangeur de chaleur (120, 120') et l'anneau de brasage (204) du filtre (200).

5. Échangeur de chaleur (120, 120') selon l'une quelconque des revendications précédentes, dans lequel le filtre (200) a une forme cylindrique.

6. Échangeur de chaleur (120, 120') selon l'une quelconque des revendications précédentes, le filtre (200) s'étendant, au moins partiellement, à l'intérieur de l'échangeur de chaleur (120, 120').

7. Échangeur de chaleur (120, 120') selon l'une quelconque des revendications précédentes, le filtre (200) s'étendant complètement à l'intérieur de l'échangeur de chaleur (120, 120').

8. Échangeur de chaleur (120, 120') selon l'une quelconque des revendications 1 à 6, dans lequel le filtre (200) est disposé, au moins partiellement, dans un bloc (300), ledit bloc (300) comprenant des moyens de sertissage grâce auxquels le bloc (300) peut être serti sur la sortie (122).

9. Échangeur de chaleur (120) selon l'une quelconque des revendications précédentes, l'échangeur de chaleur (120) étant configuré pour entreprendre un échange de chaleur entre le fluide frigorigène (R) et un courant d'air (AF1).

10. Échangeur de chaleur (120') selon l'une quelconque des revendications 1 à 8, l'échangeur de chaleur (120') étant configuré pour entreprendre un échange de chaleur entre le fluide frigorigène (R) et un liquide de refroidissement (C).

11. Échangeur de chaleur (120, 120') selon l'une quelconque des revendications précédentes, l'échangeur de chaleur (120, 120') étant utilisable comme un condenseur.
